# EUROPÄISCHE PATENTSCHRIFT

(11) **EP 2 822 701 B1**
(45) Veröffentlichungstag und Bekanntmachung des Hinweises auf die Patenterteilung: **30.09.2020**
(21) Anmeldenummer: 13706425.9
(22) Anmeldetag: 16.02.2013
(51) Int. Cl.: B05B 14/43

(54) **VERFAHREN UND VORRICHTUNG ZUM ABFÜHREN VON MIT OVERSPRAY BELADENER PROZESSLUFT SOWIE ANLAGE ZUM BESCHICHTEN VON GEGENSTÄNDEN**
METHOD AND APPARATUS FOR EXTRACTING PROCESS AIR LOADED WITH OVERSPRAY AND PLANT FOR COATING OBJECTS
PROCÉDÉ ET DISPOSITIF D'ÉVACUATION D'UN AIR DE TRAITEMENT CHARGÉ D'UN EXCÈS DE PEINTURE PULVÉRISÉE ET INSTALLATION DE REVÊTEMENT D'OBJETS

(30) Priorität: 07.03.2012 DE 102012004704
(43) Veröffentlichungstag der Anmeldung: 14.01.2015
(73) Patentinhaber: Eisenmann SE, 71032 Böblingen (DE)
(72) Erfinder: LINK, Kersten, 71120 Grafenau (DE); SWOBODA, Werner, 71032 Böblingen (DE); RÖCKLE, Jürgen, 71106 Magstadt (DE)
(74) Vertreter: Ostertag & Partner Patentanwälte mbB
(86) Internationale Anmeldenummer: PCT/EP2013/000463
(87) Internationale Veröffentlichungsnummer: WO 2013/131611

(56) Entgegenhaltungen:
- EP-A1- 2 736 656
- EP-A2- 0 071 756
- WO-A1-2013/013780
- WO-A2-03/084638
- DE-A1- 2 617 355
- US-A- 4 277 260
- US-A- 4 277 260
- US-A- 4 401 445
- US-A- 4 704 953

## Beschreibung

Die Erfindung betrifft ein Verfahren und eine Vorrichtung zum Abführen von mit Overspray beladener Prozessluft einer Beschichtungsanlage, insbesondere einer Lackieranlage, wobei Overspray von einem Luftstrom aufgenommen wird, der als Prozessluft über einen Strömungsweg zu einer Aufbereitungseinrichtung geleitet wird bzw. leitbar ist.

Außerdem betrifft die Erfindung eine Anlage zum Beschichten, insbesondere zum Lackieren, von Gegenständen, insbesondere von Fahrzeugkarosserien, mit einer Beschichtungskabine, in welcher die Gegenstände mit Beschichtungsmaterial beaufschlagbar sind und durch welche ein Luftstrom geleitet werden kann, der entstehenden Overspray aufnimmt und als Prozessluft über einen Strömungsweg abführt.

Solche Verfahren und solche Vorrichtungen sind beispielsweise aus US4277260A, US4401445A und WO03/084638A2 bekannt.

Bei der manuellen oder automatischen Applikation von Lacken auf Gegenstände wird ein Teilstrom des Lackes, der im Allgemeinen sowohl Festkörper und/oder Bindemittel als auch Lösemittel enthält, nicht auf den Gegenstand appliziert. Dieser Teilstrom wird in der Fachwelt "Overspray" genannt. In der Regel ist dieser Overspray ein disperses System, wie eine Emulsion oder Suspension oder einer Kombination daraus, und hat häufig stark klebende Eigenschaften. Der Overspray wird von dem Luftstrom in der Lackierkabine erfasst und meist zu einer Aufbereitungseinrichtung geführt. Dort wird der Overspray aus der Prozessluft abgeschieden, sodass die Luft gegebenenfalls nach einer geeigneten Konditionierung wieder in die Beschichtungskabine zurückgeleitet werden kann.

Die mit Overspray beladene Prozessluft wird mittels einer

Luftleiteinrichtung über einen Strömungsweg zu der Aufbereitungseinrichtung geleitet. Hierzu werden bei vom Markt her bekannten Anlagen so genannte Luftleitbleche und Luftleitkanäle aus solchen Blechen eingesetzt, welche von der mit Overspray beladene Prozessluft über- und durchströmt werden. Auf den Flächen, die auf dem Strömungsweg zu der Aufbereitungseinrichtung von der mit Overspray beladenen Prozessluft überströmt werden, kann sich jedoch bereits ein Teil des O-versprays niederschlagen, bevor dieser zu der Aufbereitungseinrichtung gelangt.

Im Laufe der Zeit bildet sich so auf der Luftleiteinrichtung eine dicke Schicht aus Overspray, welche stark klebende Eigenschaften hat und den freien Strömungsweg für die Prozessluft stören kann. Daher muss dieser Overspray von Zeit zu Zeit entfernt und müssen die betroffenen Flächen gereinigt werden.

Um diese Reinigung einfacher zu gestalten, ist es bekannt, die relevanten Flächen einzufetten oder mit einer Folie abzudecken. Dies ist jedoch ohne Schwierigkeiten nur für gut zugängliche Flächen möglich. Dort, wo der Strömungsweg durch Kanäle oder dergleichen mit gegebenenfalls gekrümmten Verlauf führt, ist diese Lösung nicht praktikabel.

Es ist daher Aufgabe der Erfindung, ein Verfahren, eine Vorrichtung und eine Anlage der eingangs genannten Art zu schaffen, welche diesen Gedanken Rechnung tragen.

Diese Aufgabe wird bei einem Verfahren der eingangs genannten Art dadurch gelöst, dass
mit Overspray beladene Prozessluft auf ihrem Strömungsweg durch wenigstens ein austauschbares Durchströmungsmodul mit einer Eingangsöffnung und einer Ausgangsöffnung hindurch geleitet wird, an dessen Innenflächen sich Overspray niederschlagen kann und welches nach Erreichen einer Grenzbeladung mit Overspray gegen ein unbelastetes Durchströmungsmodul ausgetauscht wird, ein Durchströmungsmodul in einem Strömungskanal angeordnet wird, der durch eine Luftleiteinrichtung vorgegeben wird, mittels welcher die mit Overspray beladene Prozessluft zu der Abscheidevorrichtung geleitet wird.

Erfindungsgemäß wird somit zumindest ein Teil des Strömungsweges der mit Overspray beladenen Prozessluft durch austauschbare Durchströmungsmodule begrenzt. Derartige Durchströmungsmodule können beispielsweise als Einweg-Module für einen einmaligen Gebrauch ausgebildet sein und als solches zusammen mit dem Overspray entsorgt werden, wenn die Grenzbeladung erreicht ist. Diese ist selbst aus umwelttechnischer Sicht eine vorteilhafte Lösung, da die im Stand der Technik übliche Reinigung der betroffenen Flächen sehr viel Energie und Ressourcen, wie Wasser und Reinigungsmittel, erfordert. So kann das Verfahren auch bei bereits vorhandenen Anlagen umgesetzt werden, bei denen in an und für sich bekannter Weise eine Luftleiteinrichtung vorhanden ist. Durch die Durchströmungsmodule wird also verhindert, dass überhaupt Overspray in Kontakt mit stationären Flächen, z.B. einer Luftleiteinrichtung, kommt.

Es ist günstig, wenn ein Durchströmungsmodul als Einweg-Modul genutzt und ein ausgetauschtes und mit Overspray beladenes Durchströmungsmodul einem Entsorgungsprozess zugeführt wird. Alternativ kann es auch vorteilhaft sein, ein solches Durchströmungsmodul einem Recyclingprozess zuzuführen.

Im Hinblick auf die Vorrichtung wird die oben angegebene Aufgabe dadurch gelöst, dass
a) im Strömungsweg der mit Overspray beladenen Prozessluft wenigstens ein austauschbares Durchströmungsmodul mit einer Eingangsöffnung und einer Ausgangsöffnung anordenbar ist, an dessen Innenflächen sich Overspray niederschlagen kann;
b) Mittel vorhanden sind, durch welche das wenigstens eine Durchströmungsmodul nach Erreichen einer Grenzbeladung mit Overspray gegen ein unbeladenes Durchströmungsmodul austauschbar ist
c) eine Luftleiteinrichtung vorhanden ist, welche den Strömungsweg für die mit Overspray beladene Prozessluft definiert und mittels welcher die mit Overspray beladene Prozessluft zu der Abscheidevorrichtung geleitet wird, und das Durchströmungsmodul bezogen auf den Querschnitt oder die Geometrie oder die Eingangsöffnung oder die Ausgangsöffnung komplementär zu demjenigen Bereich der Luftleiteinrichtung ausgebildet ist, in welchem das Durchströmungsmodul anordenbar ist.

Die Vorteile entsprechen den oben zum Verfahren erläuterten Vorteilen.

Es ist von Vorteil, wenn zumindest diejenigen Bereiche des Durchströmungsmoduls aus einem nassfesten und/oder lösemittelfesten Material bestehen, welche von mit Overspray beladener Prozessluft überströmbar sind. So ist auch ein mit Overspray beladenes Durchströmungsmodul sicher und ohne die Gefahr transportierbar, dass es durch Overspray aufweichen und dann reißen könnte.

Wenn das Durchströmungsmodul aus einem flexiblen Material gefertigt ist, kann es sich gut an vorgegebene Geometrien im Strömungsweg der Prozessluft anpassen.

Dabei ist es günstig, wenn das Durchströmungsmodul aus einem Textilmaterial oder aus einem Kunststoff, insbesondere aus Polyethylen oder Polypropylen, oder einem Gewebe-Verbundmaterial gefertigt ist.

Alternativ kann es günstig sein, wenn dass Durchströmungsmodul aus einem unflexiblen Material gefertigt ist.

Bevorzugt ist dann das Durchströmungsmodul aus Papier-, Papp- und Kartonmaterialien aus Kunststoffen, insbesondere aus Polyethylen oder Polypropylen, gefertigt. Unflexibel bedeutet vorliegend nicht zwingend starr; beispielsweise kann Karton gebogen werden, ist jedoch nicht so flexibel wie ein Textilmaterial.

Bevorzugt ist eine Luftleiteinrichtung vorhanden, welche Kammersegmente umfasst, in welchen jeweils ein Durchströmungsmodul anordenbar ist. Durch Kammersegmente kann der Aufbau der Luftleiteinrichtung skaliert sein, so dass mögliche Geräte zur Entnahme und zum Einbringen von Durchströmungsmodulen effizient eingesetzt werden können.

Im Hinblick auf die Anlage der eingangs genannten Art wird die oben angegebene Aufgabe nun dadurch gelöst, dass eine Vorrichtung zum Abführen der Prozessluft mit einigen oder allen oben erläuterten Merkmalen vorhanden ist.

Nachfolgend wird ein Ausführungsbeispiel der Erfindung anhand der Zeichnungen näher erläutert. In diesen zeigen:
- Figur 1: eine perspektivische Ansicht einer Lackierkabine einer Oberflächenbehandlungsanlage, bei welcher mit Overspray beladene Prozessluft mittels einer Luftleiteinrichtung zu einem Abscheidebereich geleitet wird;
- Figur 2: eine perspektivische Ansicht eines Ausschnitts der Lackierkabine in größerem Maßstab, wobei die Luftleiteinrichtung in teilweiser Durchsicht gezeigt ist, um dort angeordnete Durchströmungsmodule zu verdeutlichen;
- Figur 3: den Ausschnitt der Lackierkabine gemäß Figur 2 als Vertikalschnitt;
- Figur 4: eine der Figur 2 entsprechende perspektivische Ansicht eines zweiten Ausführungsbeispieles mit abgewandelter Luftleiteinrichtung und daran angepassten Durchströmungsmodulen.

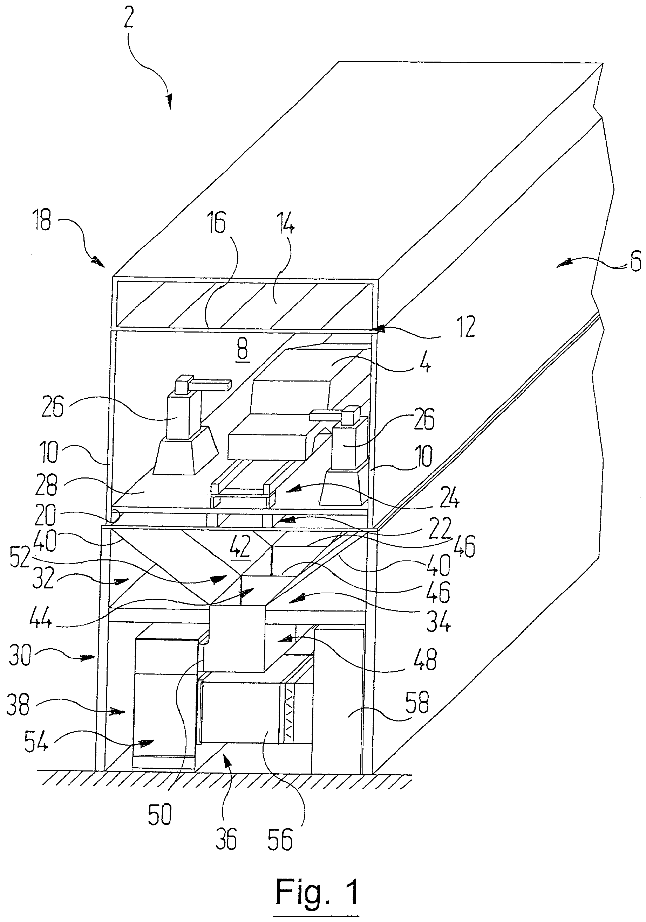

In Figur 1 ist mit 2 insgesamt eine Oberflächenbehandlungsanlage in Form einer Lackieranlage bezeichnet, in welcher Fahrzeugkarosserien 4 lackiert werden, nachdem sie in der Lackieranlage 2 vorgelagerten, nicht eigens gezeigten Vorbehandlungsstationen z.B. gereinigt und entfettet wurden. Die Lackieranlage 2 umfasst eine Lackierkabine 6, die in an und für sich bekannter Weise auf einem Stahlbau ruht, der nicht eigens mit einem Bezugszeichen versehen ist.

Die Lackierkabine 6 umfasst einen oben angeordneten Lackiertunnel 8, welcher von vertikalen Seitenwänden 10 und einer horizontalen Kabinendecke 12 begrenzt wird, jedoch an den Stirnseiten offen ist. Die Kabinendecke 12 ist die untere Begrenzung eines Luftzuführraumes 14 und als Filterdecke 16 ausgebildet. Der Luftzuführraum 14 ist Teil eines Luftsystems 18, mittels welchem ein Luftstrom erzeugbar ist, der von oben nach unten durch den Lackiertunnel 8 hindurch strömt. Beim Beschichten der Fahrzeugkarosserien 4 entstehender Overspray wird von diesem Luftstrom aufgenommen, der dann nach Verlassen des Lackiertunnels 8 als Prozessluft abgeführt wird. Damit die mit Overspray beladene Prozessluft nach unten aus dem Lackiertunnel 8 ausströmen kann, ist dieser über eine untere Öffnung 20 nach unten hin offen.

Oberhalb dieser unteren Öffnung 20 des Lackiertunnels 8 ist ein Stahlgerüst 22 angeordnet, welches ein an und für sich bekanntes Fördersystem 24 trägt, auf welches hier nicht näher eingegangen wird. Mit diesem können zu lackierende Fahrzeugkarosserien 4 von der Eingangsseite des Lackiertunnels 8 zu dessen Ausgangsseite transportiert werden. Im Inneren des Lackiertunnels 8 befinden sich Applikationseinrichtungen in Form von mehrachsigen Applikationsrobotern 26, wie sie an und für sich bekannt sind. Mittels der Applikationsroboter 26 können die Fahrzeugkarosserien 4 mit Lack beschichtet werden.

Die untere Öffnung 20 des Lackiertunnels 8 ist durch mehrere begehbare Gitterroste 28 abgedeckt. Unterhalb der Gitterroste 28 befindet sich ein Anlagenbereich 30, in welchem die von der Prozessluft mitgeführten Overspraypartikel aus der Prozessluft abgeschieden werden.

Der Anlagenbereich 30 umfasst einen Strömungsbereich 32, in welchen die mit Overspray beladene Prozessluft zunächst von oben aus dem Lackiertunnel 8 einströmt. In dem Strömungsbereich 32 ist eine Luftleiteinrichtung 34 angeordnet, mittels welcher die mit Overspray beladene Prozessluft von dem Lackiertunnel 8 abgeführt und zu einer Aufbereitungseinrichtung in Form einer Abscheidevorrichtung 36 geleitet wird. Die Abscheidevorrichtung 36 ist in einem Abscheidebereich 38 der Lackierkabine 6 angeordnet, der sich beim vorliegenden Ausführungsbeispiel unterhalb des Strömungsbereichs 32 befindet.

Der Strömungsbereich 32 ist nach oben zum Lackiertunnel 8 hin offen. Hierzu umfasst die Luftleiteinrichtung 34 seitliche Luftleitbleche 40, welche so angeordnet sind, dass ein nach oben und unten offener Sammelkanal 42 gebildet ist, der sich nach unten hin verjüngt. Dieser Sammelkanal 42 mündet unten in einen Luftleitkanal 44, der sich horizontal in Längsrichtung der Lackierkabine 6 erstreckt, in den die mit Overspraypartikeln beladene Prozessluft jedoch zunächst insgesamt vertikal nach unten einströmt. Der Luftleitkanal 44 ist durch quer zur Längsrichtung der Lackierkabine 8 angeordnete Zwischenwände 46 in nach oben offene Luftleitkästen 48 unterteilt, die in Längsrichtung der Lackierkabine 8 hintereinander angeordnet sind.

Die Luftleitkästen 48 lenken die Prozessluft dann um 90° in die Horizontale um und umfassen jeweils einen in horizontale Richtung weisenden Auslassflansch 50. Die Luftleiteinrichtung 34 mit den Luftleitblechen 40 und den Luftleitkästen 48 begrenzt auf diese Weise einen Strömungskanal und gibt so einen Strömungsweg 52 vor, der zur Abscheidevorrichtung 36 führt.

Jeder Auslassflansch 50 eines Luftleitkastens 48 führt zu einem jeweiligen Filtermodul 54, in welches die Kabinenluft in horizontaler Richtung einströmt; jedes Filtermodul 54 bildet eine Abscheideeinheit, mit welcher die Abscheidevorrichtung 36 arbeitet.

Die Filtermodule 54 sind jeweils als Einzelmodul lösbar mit dem Luftleitkanal 42 bzw. mit einem zugehörigen Luftleitkasten 48 verbunden und können bei einer Grenzbeladung mit Overspray gegen ein jeweils unbeladendes Filtermodul 54 ausgetauscht werden.

Die Prozessluft wird in jedem Filtermodul 54 mindestens noch zweimal um 90° umgelenkt und gelangt nach Durchströmen des Filtermoduls 54 weitgehend von Overspraypartikeln befreit in einen jeweiligen Verbindungskanal 56, über den sie dann in einen Sammelkanal 58 gelangt.

Die Prozessluft wird über den Sammelkanal 58 einer weiteren Aufbereitung und Konditionierung zugeführt und im Anschluss daran in einem hier nicht eigens gezeigten Kreislauf wieder in den Luftzuführraum 14 geleitet, aus dem sie wieder von oben als Kabinenluft in den Lackiertunnel 8 einströmt.

Anstelle der mit Durchströmungsfiltern arbeitenden Abscheidevorrichtung 36 kann auch eine an und für sich bekannte elektrostatisch arbeitende Abscheidevorrichtung vorgesehen sein, bei welcher die Lackpartikel durch Sprühelektroden ionisiert und an Abscheideflächen abgeschieden werden, die hierzu mit einer Hochspannungsquelle verbunden sind. Eine solche elektrostatisch arbeitende Abscheidevorrichtung kann auch die Filtermodule 54 ergänzen, wozu beispielsweise entsprechende elektrostatisch arbeitende Abscheideeinheiten in den Verbindungskanälen 56 vorhanden sein können.

Ohne weitere Maßnahmen würde sich im Betrieb der Lackierkabine 6 nun Overspray an den Flächen der Luftleiteinrichtung 34 niederschlagen, welche von der Prozessluft auf deren Strömungsweg zur Abscheidevorrichtung 36 überströmt werden. Wie eingangs erwähnt, würde sich dort im Laufe der Zeit eine störende Schicht aus Overspray bilden, die teilweise stark klebende Eigenschaften haben kann.

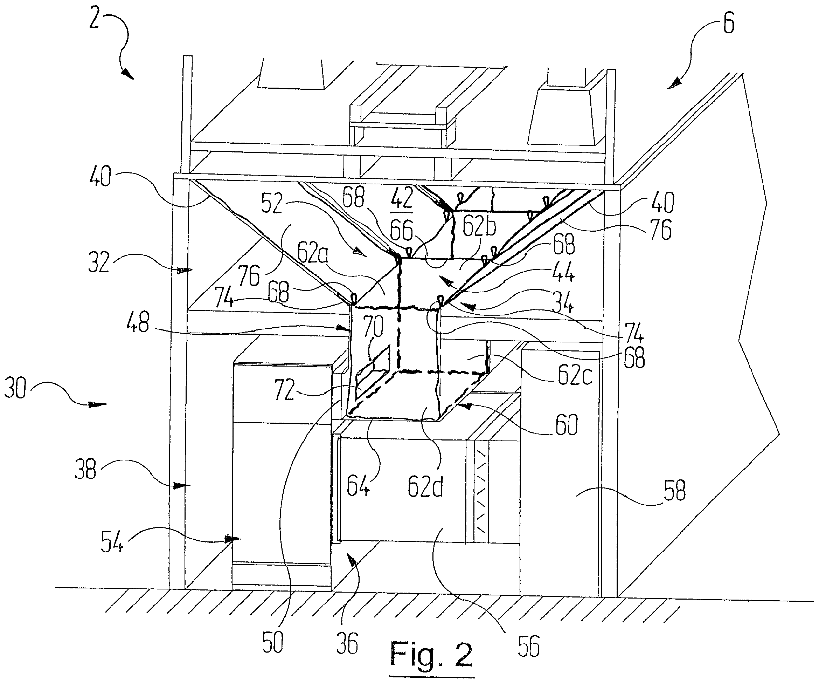

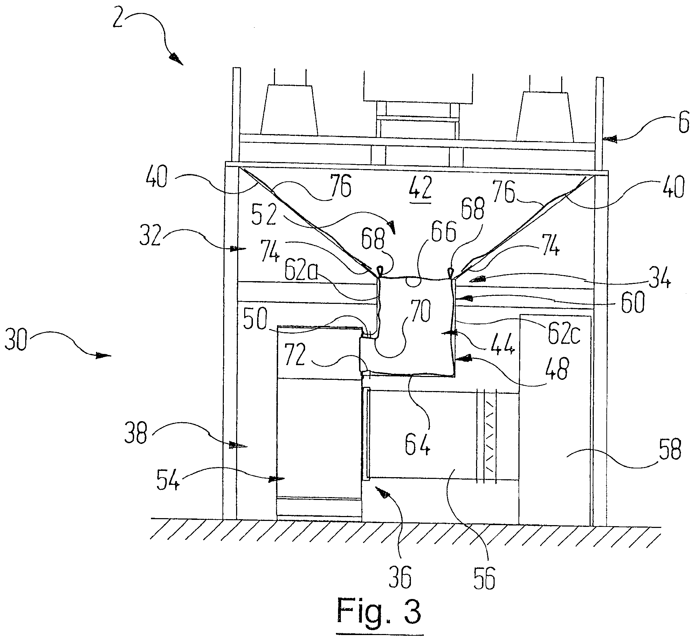

Um die betroffenen Flächen davor zu schützen und um diesen Overspray aufzufangen und auf einfache Weise einer Entsorgung oder Aufbereitung zuführen zu können, sind in die Luftleitkästen 48 austauschbare Durchströmungsmodule 60 eingesetzt, welche in den Figuren 2 und 3 zu erkennen sind und von denen nur eines mit Bezugszeichen versehen ist. Die Luftleitkästen 48 bilden somit Kammersegmente der Luftleiteinrichtung 34, in welchen Durchströmungsmodule 60 angeordnet werden können.

Die Durchströmungsmodule 60 sind aus einem flexiblen Material gefertigt. Hierfür kommen besonders Textilmaterialien oder Kunststoffe, insbesondere Polyethylen oder Polypropylen, die ihrerseits als Folie oder Gewebe vorliegen können, sowie Gewebe-Verbundmaterialien in Frage. Beim vorliegend gezeigten Ausführungsbeispiel sind die Durchströmungsmodule 60 sackartig ausgebildet.

Bei nachfolgend verwendeten Richtungsangaben wird davon ausgegangen, dass ein Durchströmungsmodul 60 in seiner Betriebsposition angeordnet ist, die in den Figuren 2 und 3 gezeigt ist und weiter unten noch detaillierter erklärt wird.

Die Abmessungen und die Geometrie der Durchströmungsmodule 60 sind komplementär zu den Abmessungen und der Geometrie der Luftleitkästen 48 mit dem Ausgangsflansch 50. Beim vorliegenden Ausführungsbeispiel haben die Durchströmungsmodule 60 daher vier Seitenwände 62a, 62b, 62c und 62d, einen Boden 64 und eine dem Boden 64 gegenüberliegende rechteckige obere Eingangsöffnung 66. Der Querschnitt des Durchströmungsmoduls 60 koaxial zur Eingangsöffnung 66 betrachtet ist somit zumindest in seiner lichten Kontur ebenfalls rechteckig. An den vier Eckenbereichen der Eingangsöffnung 66 sind jeweils Transportschlaufen 68 vorhanden.

Die Seitenwand 62a des Durchströmungsmoduls 60 umfasst eine Ausgangsöffnung 70 mit einem umlaufenden Ausgangskragen 72, der komplementär zum Ausgangsflansch 50 des Luftleitkastens 48 und in axialer Richtung etwas länger als dieser ausgebildet ist. An ihren oberen Rändern gehen die Seitenwand 62a mit dem Ausgangskragen 72 und die gegenüberliegende Seitenwand 62c des Durchströmungsmoduls 60 jeweils in eine Lasche 74 über, die über die Seitenwand 62b bzw. 62d übersteht.

Wenn ein Durchströmungsmodul 60 seine Betriebsposition einnimmt, ist es in einen Luftleitkasten 48 eingesetzt und dort so ausgerichtet, dass die Eingangsöffnung 66 nach oben weist und der Ausgangskragen 70 durch den Auslassflansch 50 des Luftleitkastens 48 hindurch in das dort angeschlossene Filtermodul 54 hineinragt. Das Durchströmungsmodul 60 kann beispielsweise mittels eines nicht eigens gezeigten Aufspannprofils oder -rahmens an dem oberen Rand des Luftleitkastens 48 verankert werden, welches für einen einmaligen oder einen wiederholten Gebrauch gedacht sein kann.

Die Laschen 74 des Durchströmungsmoduls 60 sind in dessen Betriebsposition auf die Luftleitbleche 40 umgeschlagen, die zu dem Luftleitkasten 48 führen. Um auch diese Luftleitbleche 40 vor sich niederschlagendem Overspray zu schützen und diesen Overspray aufzunehmen, liegen Abdeckelemente in Form von Abdeckungen 76 auf den Luftleitblechen 40, welche mit den Laschen 74 überlappen und diese teilweise abdecken. Diese Abdeckungen 76 können am Innenrand der unteren Öffnung 20 des Lackiertunnels 8 befestigt sein, wozu dort beispielsweise Haltenocken vorhanden sein können, über welche Laschen an den Abdeckungen 76 greifen können.

Bei einer nicht eigens gezeigten Abwandlung können die Laschen 74 der Durchströmungsmodule 60 derart lang ausgebildet sein, dass sie die Luftleitbleche 40 vollständig abdecken können. In diesem Fall umfassen die Laschen 74 somit die Abdeckungen 76.

Die Lackieranlage 2 wird nun im Hinblick auf die Durchströmungsmodule 60 und die Abdeckungen 76 wie folgt betrieben: Ein Durchströmungsmodul 60, welches gegebenenfalls bereits mit einem Aufspannprofil versehen ist, wird mittels einer Greifeinheit oder dergleichen, wie sie an und für sich bekannt ist, von oben in einen Luftleitkasten 48 eingesetzt. Hierzu greift die Greifeinheit an den Transportschlaufen 68 des Durchströmungsmoduls 60 an, wodurch dieses angehoben und bewegt werden kann. Der Zugriff auf den gewünschten Luftleitkasten 48 kann dabei aus dem Lackiertunnel 8 heraus erfolgen, wozu einzelne Gitterroste 28 an der erforderlichen Stelle am Boden des Lackiertunnels 8 vorübergehend entfernt werden.

Das Durchströmungsmodul 60 wird so ausgerichtet, dass sein Ausgangskragen 70 in Richtung zum Auslassflansch 50 des Luftleitkastens 48 weist, und dann in den Luftleitkasten 48 abgesenkt. Mittels eines Werkzeugs, beispielsweise eine langen Hakenstange, wird der Ausgangskragen 72 des Durchströmungsmoduls 60 in und durch den Auslassflansch 50 des Luftleitkastens 48 hindurch aufgefaltet. Die Laschen 74 werden auf die Luftleitbleche 40 umgeschlagen; anschließend werden die Abdeckungen 76 auf die Luftleitbleche 40 aufgelegt. Auf diese Weise werden alle Luftleitkästen 60 und alle Luftleitbleche 40 mit Durchströmungsmodulen 60 bzw. Abdeckungen 76 versehen.

Wenn die Laschen 74 so lang ausgebildet sind, dass sie die Abdeckungen 76 umfassen, werden diese langen Laschen 74 entsprechend mittels eines Werkzeugs nach oben über die Luftleitbleche 40 abgerollt.

Auf ihrem Strömungsweg 52 von dem Lackiertunnel 8 zur Abscheidevorrichtung 36 wird mit Overspray beladene Prozessluft nun also durch die austauschbaren Durchströmungsmodule 60 geleitet. An deren Innenflächen schlägt sich Overspray nieder, welcher sich sonst an den überströmten Flächen der Luftleitkästen 48 absetzen würde. In entsprechender Weise schlägt sich auch auf den Abdeckungen 76 nieder, welche die Luftleitbleche 40 bedecken.

Im Laufe der Zeit schlägt sich eine derart dicke Schicht aus Overspray auf den überströmten Flächen der Durchströmungsmodule 60 und der Abdeckungen 76 nieder, dass ein einwandfreies Abströmen der Prozessluft von der Lackierkabine 8 nicht mehr gewährleistet ist. In diesem Fall haben die Durchströmungsmodule 60 und die Abdeckungen 76 eine Grenzbeladung mit Overspray erreicht und werden gegen unbeladene Durchströmungsmodule 60 und Abdeckungen 76 ausgetauscht.

Hierzu wird der Lackierbetrieb eingestellt. Zunächst werden die Ausgangskragen 72 der Durchströmungsmodule 60 mit Hilfe von Werkzeugen, wie beispielsweise langen Hakenstangen oder dergleichen, nach innen in das jeweilige Durchströmungsmodul 60 hinein gezogen. Dann werden die nun mit Overspray belasteten Abdeckungen 76 und die Laschen 74 oder nur die entsprechend langen Laschen 74 ebenfalls mit Hilfe der Werkzeuge von oben nach unten in Richtung auf die Luftleitkästen 48 auf- und in die mit Overspray belasteten Durchströmungsmodule 60 hineingerollt.

Dann werden die Durchströmungsmodule 60 mit eingestülptem Ausgangskragen 70 und aufgenommenen Abdeckungen 76 oder Laschen 74 mit Hilfe der bereits erwähnten Greifeinheit nach oben aus dem zugehörigen Luftleitkasten 48 herausgehoben und anschließend zu einem Entsorgungs- und/oder Recyclingprozess geführt. Grundsätzlich sollen die Durchströmungsmodule 60 und die Abdeckungen 76 als Einweg-Komponenten verwendet werden. Alternativ kann für die Durchströmungsmodule 60 und/oder die Abdeckungen 76 ein recyclebares Material gewählt sein.

In der oben beschriebenen Weise werden dann in die nun leeren Luftleitkästen 48 wieder unbelastete Durchströmungsmodule 60 eingesetzt und Abdeckungen 76 oder lange Laschen 70 auf die Luftleitbleche 40 aufgelegt.

Gegebenenfalls kann der Austausch der Durchströmungsmodule 60 auch in einem manuellen oder automatisierten Prozess erfolgen, ohne dass der Lackierbetrieb hierzu eingestellt werden muss.

Bei dem oben erläuterten Ausführungsbeispiel sind die Zwischenwände 46 in dem Luftleitkanal 44 so vorgesehen, dass jeder Luftleitkasten 48 einen einzigen Auslassflansch 50 zu einem Filtermodul 54 umfasst. Bei einer nicht eigens gezeigten Abwandlung können die Luftleitkästen 48 und die dadurch gebildeten Kammersegmente jedoch auch größer sein und dann zwei oder auch mehr Auslassflansche 50 umfassen. In diesem Fall hat ein an einen solchen Luftleitkasten 48 angepasstes Durchströmungsmodul 60 dann auch mehrere entsprechend angeordnete und dimensionierte Ausgangskragen 70.

Ferner können Durchströmungsmodule 60 mit oder ohne Abdeckungen 76 auch bei anderen Strömungsverläufen der Prozessluft eingesetzt werden, als es beim vorliegenden Ausführungsbeispiel der Fall ist. Zum Beispiel kann ein schlauchförmiges Durchströmungsmodul mit einer Eingangs- und einer Ausgangsöffnung an gegenüberliegenden Stirnenden für einen geradlinigen Strömungsabschnitt auf dem Strömungsweg der Prozessluft konzipiert sein. Der Querschnitt und die Geometrie der Durchströmungsmodule 60, welche konkrete Form die Eingangsöffnung 66 und die Ausgangsöffnung 70 haben und wo und in welcher Weise diese angeordnet sind, hängt insgesamt von den baulichen Gegebenheiten, d.h. davon ab, wie die Luftleiteinrichtung 34 den Bereich des Strömungsweg 52 definiert, in welchen das Durchströmungsmodul 60 eingesetzt wird. Dieser Bereich ist beim vorliegenden Ausführungsbeispiel durch die Luftleitkästen 48 vorgegeben.

Statt der sackartigen Ausbildung aus einem flexiblen Material kann ein Durchströmungsmodul 60 auch aus einem weniger flexiblen Material gefertigt sein. In diesem Fall kommen als Material für ein unflexibles Durchströmungsmodul 60 besonders Papier-, Papp- und Kartonmaterialien oder Kunststoffe, und hier wieder Polyethylen und Polypropylen, in Betracht. Hier können beispielsweise kastenartige oder als Durchströmungstunnel ausgebildete Durchströmungsmodule 60 gebildet sein.

In jedem Fall sollten zumindest diejenigen Bereiche des Durchströmungsmoduls 60 aus einem nassfesten und/oder lösemittelfesten Material bestehen, welche von mit Overspray beladener Prozessluft überströmt werden, so dass es dort zu keinem Auf- oder Durchweichen des Durchströmungsmoduls 60 kommen kann, wenn sich Overspray niederschlägt. Auf diese Weise kann auch ein mit Overspray beladenes Durchströmungsmodul 60 sicher gegriffen und entfernt werden, ohne dass die Gefahr besteht, dass das Material reißt und die Luftleiteinrichtung 34 verschmutzt wird.

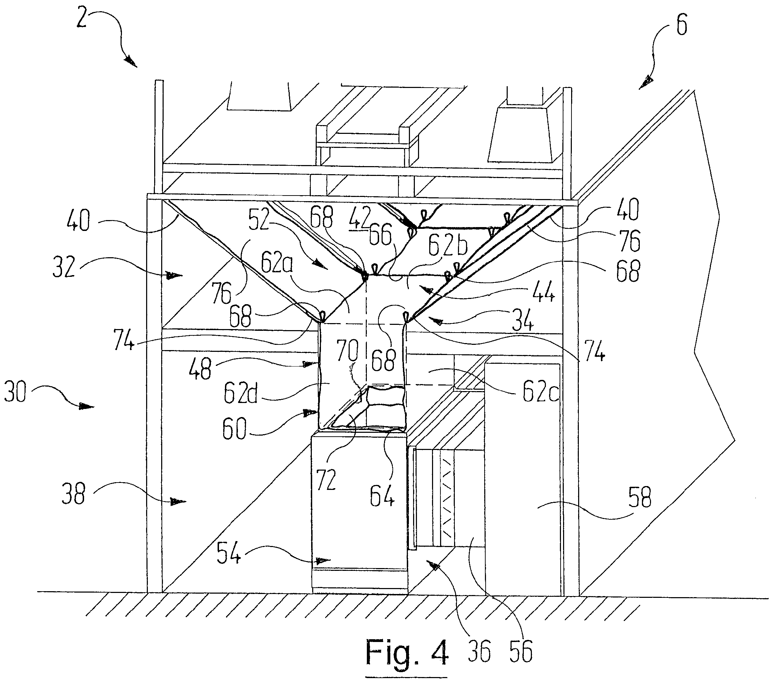

Figur 4 zeigt ein zweites Ausführungsbeispiel einer Anlage 2, bei welcher dieselben Bezugszeichen vergeben wurden wie bei der Anlage 2 nach den Figuren 1 bis 3. Dort ist die Luftleiteinrichtung 34 abgewandelt und der Strömungsweg 52 für die mit Overspray beladene Prozessluft führt vertikal von oben nach unten in das Filtermodul 54 hinein. Der Auslassflansch 50 der Luftleitkästen 48 weist dementsprechend nach unten und die Filtermodule 54 befinden sich in ihrer Betriebsposition jeweils unterhalb eines Luftleitkastens 48. Die Durchströmungsmodule 60 sind an diese Konfiguration der Luftleitkästen 48 angepasst, weshalb deren Ausgangsöffnung 70 und deren Ausgangskragen 72 entsprechend im jeweiligen Boden 64 eines Durchströmungsmoduls 60 vorhanden sind. In diesem Fall sind die Durchströmungsmodule 60 somit eher schlauchartig ausgebildet.

Dann kann ein Durchströmungsmodul 60 zusammen mit einem Filtermodul 54 eine Austausch-Baugruppe bilden. Beispielsweise kann ein dann eher flexibles und schlauchförmiges Durchströmungsmodul 60 zunächst als zusammengefalteter Ring auf die dann vertikal oben liegende Eintrittsöffnung des Filtermoduls 54 aufgesetzt sein. Wenn das Filtermodul 54 in seine Betriebsposition gebracht worden ist, wird das Durchströmungsmodul 60 mit Hilfe eines Werkzeugs in Richtung vertikal nach oben auseinander gezogen oder gefaltet. Hierzu können wieder Schlaufen 68 am Durchströmungsmodul 60 vorhanden sein.

Wenn die Austausch-Baugruppe ausgetauscht werden soll, wird entsprechend zunächst das mit Overspray beladene Durchströmungsmodul 60 nach unten zum Filtermodul 54 hin eingefaltet und dann gemeinsam mit diesem entfernt.

In entsprechender Weise kann auch bei der Anlage 2 nach den Figuren 1 bis 3 ein Durchströmungsmodul 60 mit einem Filtermodul 54 eine solche Austausch-Baugruppe bilden.

Bei den oben beschriebenen Lackieranlagen 2 sind die Luftleitbleche 40 verhältnismäßig stark gegenüber einer Horizontalen geneigt. Bei nicht eigens gezeigten Abwandlungen können die Luftleitbleche 40 jedoch weniger stark geneigt sein, so dass diese von Wartungspersonen gefahrlos begehbar sind. So kann der Austausch der Durchströmungsmodule 60 und/oder der Abdeckungen 76 manuell von Wartungspersonen unterstützt werden, die sich dann beim Austauschvorgang auf den Luftleitblechen 40 befinden. Eine leichte Neigung der Luftleitbleche 40, beispielsweise von 3° bis 5° gegenüber der Horizontalen, kann dabei noch akzeptabel sein.

## Patentansprüche

1. Verfahren zum Abführen von mit Overspray beladener Prozessluft einer Beschichtungsanlage, insbesondere einer Lackieranlage, bei welchem Overspray von einem Luftstrom aufgenommen wird, der als Prozessluft über einen Strömungsweg (52) zu einer Abscheidevorrichtung (36) geleitet wird,
**dadurch gekennzeichnet, dass**
mit Overspray beladene Prozessluft auf ihrem Strömungsweg (52) durch wenigstens ein austauschbares Durchströmungsmodul (60) mit einer Eingangsöffnung (66) und einer Ausgangsöffnung (70) hindurch geleitet wird, an dessen Innenflächen sich Overspray niederschlagen kann und welches nach Erreichen einer Grenzbeladung mit Overspray gegen ein unbelastetes Durchströmungsmodul (60) ausgetauscht wird;
ein Durchströmungsmodul (60) in einem Strömungskanal angeordnet wird, der durch eine Luftleiteinrichtung (34) vorgegeben wird, mittels welcher die mit Overspray beladene Prozessluft zu der Abscheidevorrichtung (36) geleitet wird.

2. Verfahren nach Anspruch 1, **dadurch gekennzeichnet, dass** ein ausgetauschtes und mit Overspray beladenes Durchströmungsmodul einem Entsorgungs- und/oder Recyclingprozess zugeführt wird.

3. Vorrichtung zum Abführen von mit Overspray beladener Prozessluft einer Beschichtungsanlage, insbesondere einer Lackieranlage, bei welcher Overspray von einem Luftstrom aufgenommen wird, der als Prozessluft über einen Strömungsweg (52) zu einer Abscheidevorrichtung (36) leitbar ist,
**dadurch gekennzeichnet, dass**
a) im Strömungsweg (52) der mit Overspray beladenen Prozessluft wenigstens ein austauschbares Durchströmungsmodul (60) mit einer Eingangsöffnung (66) und einer Ausgangsöffnung (70) anordenbar ist, an dessen Innenflächen sich Overspray niederschlagen kann;
b) Mittel (68) vorhanden sind, durch welche das wenigstens eine Durchströmungsmodul (60) nach Erreichen einer Grenzbeladung mit Overspray gegen ein unbeladenes Durchströmungsmodul (60) austauschbar ist,
c) eine Luftleiteinrichtung (34) vorhanden ist, welche den Strömungsweg (52) für die mit Overspray beladene Prozessluft definiert und mittels welcher die mit Overspray beladene Prozessluft zu der Abscheidevorrichtung (36) geleitet wird, und das Durchströmungsmodul (60) bezogen auf den Querschnitt oder die Geometrie oder die Eingangsöffnung (66) oder die Ausgangsöffnung (70) komplementär zu demjenigen Bereich (48) der Luftleiteinrichtung (34) ausgebildet ist, in welchem das Durchströmungsmodul (60) anordenbar ist.

4. Vorrichtung nach Anspruch 3, **dadurch gekennzeichnet, dass** zumindest diejenigen Bereiche des Durchströmungsmoduls (60) aus einem nassfesten Material bestehen, welche von mit Overspray beladener Prozessluft überströmbar sind.

5. Vorrichtung nach Anspruch 3 oder 4, **dadurch gekennzeichnet, dass** das Durchströmungsmodul (52) aus einem flexiblen Material gefertigt ist.

6. Vorrichtung nach Anspruch 5, **dadurch gekennzeichnet, dass** das Durchströmungsmodul (60) aus einem Textilmaterial oder aus einem Kunststoff, insbesondere aus Polyethylen oder Polypropylen, oder einem Gewebe-Verbundmaterial gefertigt ist.

7. Vorrichtung nach Anspruch 3 oder 4, **dadurch gekennzeichnet, dass** das Durchströmungsmodul (60) aus einem unflexiblen Material gefertigt ist.

8. Vorrichtung nach Anspruch 7, **dadurch gekennzeichnet, dass** das Durchströmungsmodul (60) aus Papier-, Papp- und Kartonmaterialien, MDF-Material oder auch aus Holz oder aus Kunststoffen, insbesondere aus Polyethylen oder Polypropylen, gefertigt ist.

9. Vorrichtung nach einem der Ansprüche 3 bis 8, **dadurch gekennzeichnet, dass** eine Luftleiteinrichtung (34) vorhanden ist, welche Kammersegmente (48) umfasst, in welchen jeweils ein Durchströmungsmodul (60) anordenbar ist.

10. Anlage zum Beschichten, insbesondere zum Lackieren, von Gegenständen, insbesondere von Fahrzeugkarosserien, mit
einer Beschichtungskabine (2), in welcher die Gegenstände (4) mit Beschichtungsmaterial beaufschlagbar sind und durch welche ein Luftstrom geleitet werden kann, der entstehendes Overspray aufnimmt und als Prozessluft über einen Strömungsweg (52) abführt,
**dadurch gekennzeichnet, dass**
eine Vorrichtung zum Abführen der Prozessluft nach einem der Ansprüche 3 bis 9 vorhanden ist.

## Claims

1. Method for carrying off overspray-laden process air of a coating plant, in particular a painting plant, in which method overspray is picked up by an air stream which is led as process air via a flow path (52) to a separating device (36),
**characterized in that**
overspray-laden process air is led on its flow path (52) through at least one exchangeable throughflow module (60) with an inlet opening (66) and an outlet opening (70), on the inner surfaces of which module overspray can be deposited and which, after a limit loading with overspray has been reached, is exchanged for an unladen throughflow module (60),
a throughflow module (60) is arranged in a flow duct which is specified by an air guiding device (34) by means of which the process air laden with overspray is led to the separating device (36).

2. Method according to Claim 1, **characterized in that** an exchanged and overspray-laden throughflow module is supplied to a disposal and/or recycling process.

3. Apparatus for carrying off overspray-laden process air of a coating plant, in particular of a painting plant, in which apparatus overspray is picked up by an air stream which can be led as process air via a flow path (52) to a separating device (36), **characterized in that**
a) in the flow path (52) of the overspray-laden process air, at least one exchangeable throughflow module (60) with an inlet opening (66) and an outlet opening (70) can be arranged, on the inner surfaces of which module overspray can be deposited;
b) means (68) are present, by which the at least one throughflow module (60), after a limit loading with overspray has been reached, is exchangeable for an unladen throughflow module (60),
c) an air guiding device (34) is present, which defines the flow path (52) for the overspray-laden process air and by means of which the process air laden with overspray is led to the separating device (36), and the throughflow module (60) is formed, with respect to the cross-section or the geometry or the inlet opening (66) or the outlet opening (70), complementary to that region (48) of the air guiding device (34) in which the throughflow module (60) can be arranged.

4. Apparatus according to Claim 3, **characterized in that** at least those regions of the throughflow module (60) over which overspray-laden process air can flow are composed of a wet-strength material.

5. Apparatus according to Claim 3 or 4, **characterized in that** the throughflow module (52) is produced from a flexible material.

6. Apparatus according to Claim 5, **characterized in that** the throughflow module (60) is produced from a textile material or from a plastic, in particular from polyethylene or polypropylene, or a woven fabric composite material.

7. Apparatus according to Claim 3 or 4, **characterized in that** the throughflow module (60) is produced from an inflexible material.

8. Apparatus according to Claim 7, **characterized in that** the throughflow module (60) is produced from paper, paperboard and cardboard materials, MDF material or else from wood or from plastics, in particular from polyethylene or polypropylene.

9. Apparatus according to one of Claims 3 to 8, **characterized in that** an air guiding device (34) is present, which comprises chamber segments (48) in which in each case one throughflow module (60) can be arranged.

10. Plant for coating, in particular for painting, objects, in particular vehicle bodies, having
a coating booth (2), in which the objects (4) can be applied with coating material and through which can be led an air stream which picks up resulting overspray and carries it off as process air via a flow path (52),
**characterized in that**
an apparatus for carrying off the process air according to one of Claims 3 to 9 is present.

## Revendications

1. Procédé d'évacuation d'air de traitement chargé d'excédent de pulvérisation dans une installation de revêtement, une installation de laquage en particulier, dans lequel un excédent de pulvérisation est prélevé par un courant d'air dirigé vers un dispositif de séparation (36) sous forme d'air de traitement, en empruntant un trajet d'écoulement (52), **caractérisé par le fait**
**que** de l'air de traitement chargé d'excédent de pulvérisation est guidé, sur son trajet d'écoulement (52), pour parcourir au moins un module remplaçable d'écoulement (60) pourvu d'une ouverture d'entrée (66) et d'une ouverture de sortie (70), sur les surfaces intérieures duquel de l'excédent de pulvérisation peut se précipiter, et qui est remplacé par un module vierge d'écoulement (60) après qu'une charge limite en excédent de pulvérisation a été atteinte ;
**qu'**un module d'écoulement (60) est logé dans un canal d'écoulement prédéterminé par un système (34) de guidage d'air au moyen duquel l'air de traitement, chargé d'excédent de pulvérisation, est dirigé vers le dispositif de séparation (36).

2. Procédé selon la revendication 1, **caractérisé par le fait qu'**un module d'écoulement remplacé, et chargé d'excédent de pulvérisation, est voué à un processus d'élimination et/ou de recyclage.

3. Dispositif dévolu à l'évacuation d'air de traitement chargé d'excédent de pulvérisation dans une installation de revêtement, une installation de laquage en particulier, dans lequel un excédent de pulvérisation est prélevé par un courant d'air pouvant être dirigé vers un dispositif de séparation (36) sous forme d'air de traitement, en empruntant un trajet d'écoulement (52),
**caractérisé**
a) **par** la faculté d'implanter, sur le trajet d'écoulement (52) de l'air de traitement chargé d'excédent de pulvérisation, au moins un module remplaçable d'écoulement (60) pourvu d'une ouverture d'entrée (66) et d'une ouverture de sortie (70), sur les surfaces intérieures duquel de l'excédent de pulvérisation peut se précipiter ;
b) par la présence de moyens (68) par l'intermédiaire desquels ledit module d'écoulement (60), à présence minimale, peut être remplacé par un module vierge d'écoulement (60) après qu'une charge limite en excédent de pulvérisation a été atteinte ;
c) par la présence d'un système (34) de guidage d'air, qui définit le trajet d'écoulement (52) dédié à l'air de traitement chargé d'excédent de pulvérisation et au moyen duquel ledit air de traitement, chargé d'excédent de pulvérisation, est dirigé vers le dispositif de séparation (36), sachant que, rapporté à la section transversale ou à la géométrie, voire à l'ouverture d'entrée (66) ou à l'ouverture de sortie (70), le module d'écoulement (60) offre une réalisation complémentaire de celle de la région (48) dudit système (34) de guidage d'air dans laquelle ledit module d'écoulement (60) peut être implanté.

4. Dispositif selon la revendication 3, **caractérisé par le fait qu'**au moins les régions du module d'écoulement (60), pouvant être balayées en surplomb par de l'air de traitement chargé d'excédent de pulvérisation, sont constituées d'un matériau résistant à l'humidité.

5. Dispositif selon la revendication 3 ou 4, **caractérisé par le fait que** le module d'écoulement (52) est fabriqué en un matériau flexible.

6. Dispositif selon la revendication 5, **caractérisé par le fait que** le module d'écoulement (60) est fabriqué en un matériau textile ou en une matière plastique, notamment en du polyéthylène ou en du polypropylène, voire en un matériau composite à base de tissu.

7. Dispositif selon la revendication 3 ou 4, **caractérisé par le fait que** le module d'écoulement (60) est fabriqué en un matériau inflexible.

8. Dispositif selon la revendication 7, **caractérisé par le fait que** le module d'écoulement (60) est fabriqué en des matériaux à base de papier, de carton fort et de cartonnage, en un matériau fibreux de densité moyenne, ou bien également en du bois ou en des matières plastiques, notamment en du polyéthylène ou en du polypropylène.

9. Dispositif selon l'une des revendications 3 à 8, **caractérisé par** la présence d'un système (34) de guidage d'air incluant des segments de compartimentage (48) dans lesquels un module d'écoulement (60) peut être respectivement implanté.

10. Installation affectée au revêtement et notamment au laquage d'objets, en particulier des carrosseries de véhicules, comportant
une cabine de revêtement (2) dans laquelle lesdits objets (4) peuvent être sollicités par du matériau de revêtement, et à travers laquelle peut être guidé un courant d'air qui prélève de l'excédent de pulvérisation engendré et l'évacue, par l'intermédiaire d'un trajet d'écoulement (52), sous forme d'air de traitement,
**caractérisée par**
la présence d'un dispositif conforme à l'une des revendications 3 à 9, dévolu à l'évacuation de l'air de traitement.
